# EUROPÄISCHE PATENTSCHRIFT

(11) **EP 0 335 158 B1**
(45) Veröffentlichungstag und Bekanntmachung des Hinweises auf die Patenterteilung: **06.07.1994**
(21) Anmeldenummer: 89104344.0
(22) Anmeldetag: 11.03.1989
(51) Int. Cl.: C08G 73/02, C08G 69/48, D21H 17/54, D06M 15/61

(54) **Stickstoffhaltige polymere Verbindungen**
Nitrogen containing polymeric compounds
Composés de polymères contenant de l'azote

(30) Priorität: 26.03.1988 DE 3810424
(43) Veröffentlichungstag der Anmeldung: 04.10.1989
(73) Patentinhaber: BAYER AG, 51368 Leverkusen (DE)
(72) Erfinder: Bachem, Henning, Dr., D-5000 Köln 80 (DE); Schröder, Georg, Dr., D-5093 Burscheid (DE); Süling, Carlhans, Dr., D-5068 Odenthal (DE); Reiners, Jürgen, Dr., D-5090 Leverkusen 1 (DE); Muszik, Janos, Dr., D-5090 Leverkusen 1 (DE); Arlt, Dieter, Prof.Dr., D-5000 Köln 80 (DE); Jautelat, Manfred, Dr., D-5093 Burscheid (DE); Schröer, Wolf-Dieter, Dr., D-8000 München 71 (DE)

(56) Entgegenhaltungen:
- EP-A- 0 182 653
- GB-A- 1 165 394

## Beschreibung

Die vorliegende Erfindung betrifft stickstoffhaltige, vernetzbare polymere Verbindungen, deren Herstellung sowie deren Verwendung als Hilfsmittle bei der Papierherstellung.

Vernetzbare Umsetzungsprodukte aus Mono- oder Polyaminen und Epihalogenhydrin oder Dihalogenhydrin und ihre Verwendung zur Naßfestausrüstung von Papier sind bekannt.

So werden beispielsweise in den deutschen Offenlegungsschriften 22 29 219, 22 57 271, 29 38 588 und 29 49 870, den deutschen Patentschriften 17 20 905, 17 71 043 und 19 06 450, den europäischen Patentanmeldungen 0 131 200 und 0 126 176 und den US-Patentschriften 29 26 154 und 33 32 901 selbstvernetzende, wasserlösliche Reaktionsprodukte aus Epihalogenhydrinen und basischen Polyamidaminen oder Polyaminen bzw. Gemischen hieraus beschrieben, wobei jeweils ein Überschuß an Epihalogenhydrin pro Äquivalent an basischen Aminogruppen verwendet wird.

Aus den deutschen Offenlegungsschriften 15 95 302 und 19 06 561 sind wasserlösliche Kondensationsprodukte aus ε-Caprolactam, Polyaminen, Polyamidaminen und Epichlorhydrin bekannt.

Nach dem Verfahren der deutschen Offenlegungsschrift 20 52 023 werden wasserlösliche, härtbare Harze durch Umsetzung von Epichlorhydrin mit Ammoniak und/oder Polyaminen gewonnen.

Außerdem sind aus der deutschen Offenlegungsschrift 17 70 150 wasserlösliche, kationische Vinylpolymere bekannt, die durch Transamidierung von Polyacrylamid mit Polyaminen und anschließende Umsetzung mit Epichlorhydrin zugänglich sind.

Aus den deutschen Offenlegungsschriften 17 95 416 und 15 46 323 sind wasserlösliche Reaktionsprodukte aus Polyethylenimin und Epichlorhydrin oder Dichlorhydrin bekannt.

Im allgemeinen werden zur Synthese von technisch hochwertigen Produkten 1,0 bis 2,5 Mol Epihalogenhydrin oder Dihalogenhydrin bezogen auf 1 Mol basischen Stickstoff im Mono- oder Polyamin verwendet. Die Reaktionsprodukte haben einen hohen Gehalt an Halogenhydrin-Reaktivgruppen. Diese sorgen dafür, daß ausreichend reaktive, vernetzungsfähige Produkte erhalten und dadurch die gewünschten Naßfestwerte von Papier erzielt werden.

Bei der Verwendung als Naßfestmittel in der Papierherstellung erfolgt jedoch eine unvollständige Reaktion mit der Cellulosefaser bzw. Selbstvernetzung, so daß nicht umgesetzte Anteile der Produkte gelangen in das Abwasser der Papiermaschinen gelangen und zu dessen Belastung mit organisch gebundenem Halogen beitragen.

Aufgabe der vorliegenden Erfindung war es, wasserlösliche, lagerstabile Verbindungen herzustellen, die im neutralen oder alkalischen pH-Bereich vernetzbar sind und die keine oder nur sehr geringe Mengen an organisch gebundenem Halogen enthalten. Durch die Verwendung geeigneter halogenfreier Vernetzer sollte ein schrittweiser oder vollständiger Ersatz von Epihalogenhydrin oder Dihalogenhydrin erreicht werden.

Aufgabe war es weiterhin, Naßfestigkeiten auf Papier zu erreichen, die den handelsüblichen Polyamin-Epihalogenhydrin-Harzen entsprechen.

Es wurde gefunden, daß sich die weiter unten definierten erfindungsgemäßen Verbindungen hervorragend zum Aufbau wasserlöslicher, lagerstabiler, vernetzbarer Polyamin-Harze eignen.

Gegenstand der Erfindung sind vernetzbare Verbindungen mit einem Molekulargewicht (Gewichtsmittel) von 1500 bis 200 000, deren 5 bis 30 gew.-%ige Lösungen oder Emulsionen eine Viskosität (25°C) von 10 bis 600 m Pa·s aufweisen und die erhältlich sind durch Umsetzung von
A
   1) einem wasserlöslichen Mono- oder Polyamin der Formeln 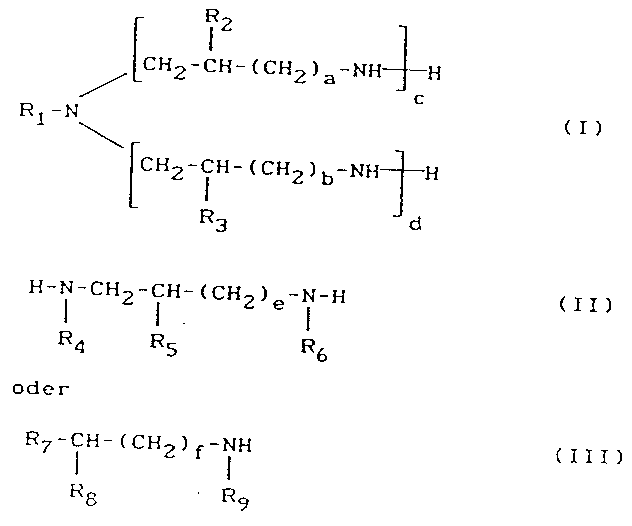 worin
      - R₁, R₄ und R₆: unabhängig voneinander für Wasserstoff oder einen gegebenenfalls durch Hydroxy, oder Amino substituierten C₁-C₅-Alkylrest,
      - R₂, R₃, R₅ und R₉: unabhängig voneinander für Wasserstoff, Methyl oder Ethyl,
      - R₇ und R₈: unabhängig voneinander für Wasserstoff, Hydroxy oder einen gegebenenfalls durch Hydroxy substituierten C₁-C₄-Alkylrest,
      - a, b, e, f: unabhängig voneinander für eine ganze Zahl von 0 bis 4,
      - c und d: unabhängig voneinander für eine ganze Zahl von 1 bis 6 stehen,
      und/oder
   2) einem Polyalkylenpolyamin der Formel 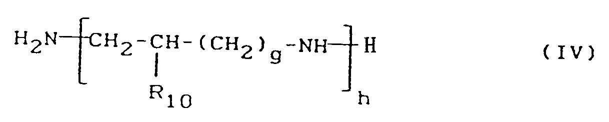 worin
      - R₁₀: für Wasserstoff und Methyl,
      - g: für 0 oder 1 und
      - h: für eine ganze Zahl von 14 bis 2500
      stehen,
      und/oder
   3) einem wasserlöslichen Polyamidamin mit einem Molekulargewicht von mindestens 800, hergestellt aus
      α) Polyaminen der Formel I oder aus Gemischen dieser Polyamine mit bis zu 50 Mol-% an Diaminen der Formel II
      und
      β) aliphatischen oder aromatischen Dicarbonsäuren mit 2 bis 12 C-Atomen bzw. deren funktionellen Derivaten, wie Anhydriden, Estern, Halbestern oder Amiden
      und/oder
      γ) 3 bis 6 C-Atome enthaltenden Aminocarbonsäuren oder deren Lactamen
      und/oder
   4) einem wasserlöslichen, sekundären Aminogruppen aufweisenden Polyharnstoff, welcher durch Kondensation von Harnstoff mit Polyaminen, die mindestens drei Aminogruppen enthalten, von denen wenigstens eine eine tertiäre Aminogruppe ist, oder Mischungen dieser Polyamine mit zwei primären oder, zwei sekundären Aminogruppen enthaltenden aliphatischen, araliphatischen, cycloaliphatischen oder heterocyclischen Polyaminen sowie gegebenenfalls mit mindestens drei Kohlenstoffatomen enthaltenden ω-Aminocarbonsäuren oder deren Lactamen hergestellt worden ist,
      und/oder
   5) einem durch Polymerisation von 1,2-Alkyleniminen hergestellten Polyalkylenimin
   mit
B) 2,3-Epoxypropyl-sulfonsäureestern und/oder 2-Hydroxypropyl-1,3-bis-sulfonsäureester, gegebenenfalls im Gemisch mit bis zu 15 Mol-%, an Epichlorhydrin oder Dihalogenhydrin,
und gegebenenfalls anschließende oder gleichzeitige Umsetzung mit weiterem Mono- oder Polyamin der Formeln (I) bis (III) im Molverhältnis von 0,75 bis 3,5 Mol, bevorzugt 0,3 bis 3,0 Mol, der Komponente B) pro Mol Basenstickstoff der Komponente A).

Besonders bevorzugte wasserlösliche, vernetzbare Verbindungen sind erhältlich, wenn als Komponente
B) ein 2,3-Epoxypropylsulfonsäureester oder 2-Hydroxypropyl-1,3-bissulfonsäureester der Formeln 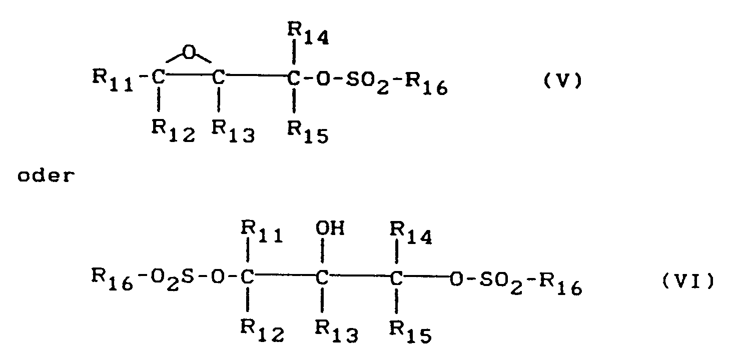 worin
   - R₁₁, R₁₂, R₁₃, R₁₄ und R₁₅: unabhängig voneinander für Wasserstoff oder einen gegebenenfalls durch Alkoxy, Cyano, Carbonsäurealkylester substituierten Alkyl-, Cycloalkyl-, Aryl- oder Aralkyl-Rest und
   - R₁₆: für einen Alkyl-, Cycloalkyl- oder einen gegebenenfalls durch Hydroxy, Alkoxy, Cyano, Carbonamido, Carbonsäurealkylester oder eine gegebenenfalls mono- oder dialkylierte Aminogruppe substituierten Aryl- oder Aralkyl-Rest stehen,
   eingesetzt wird und gegebenenfalls gleichzeitige oder anschließende Umsetzung mit einem weiteren Mono- oder Polyamin der Formeln (I) bis (III) im Molverhältnis von 0,75 bis 3,5 Mol der Komponente B), bevorzugt 0,8 bis 3,0 Mol, pro Mol Basenstickstoff der Komponente A) erfolgt.

Von den Ausgangskomponenten A) sind die Verbindungen A1), A2) und A3) bevorzugt.

Das bevorzugte Molverhältnis der Amine A 3α) zu Dicarbonsäuren A3 β) liegt bei 0,8 bis 1,4:1.

In den Formeln (V) und (VI) stehen bevorzugt:
- R₁₁-R₁₅: für Wasserstoff oder einen gegebenenfalls durch C₁-C₄-Alkoxy, Cyano oder Carbonsäure-C₁-C₄-alkylester substituierten C₁-C₈-Alkyl-, C₅-C₁₂-Cycloalkyl-, Phenyl-, Naphthyl- oder Benzyl-Rest und
- R₁₆: für einen C₁-C₁₆-Alkyl-, C₅-C₁₂-Cycloalkyl- oder einen gegebenenfalls durch Hydroxy, C₁-C₄-Alkoxy, Cyano, Carbonamido, Carbonsäure-C₁-C₄-alkylester oder gegebenenfalls durch 1 oder 2 C₁-C₄-Alkyl substituiertes Amino substituierten Phenyl-, Naphthyl- oder Benzyl-Rest.

Bevorzugte Sulfonsäureester der Formeln (V) und (VI) haben die Formeln 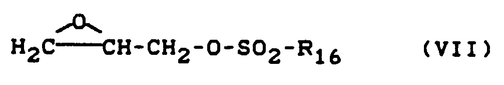
und 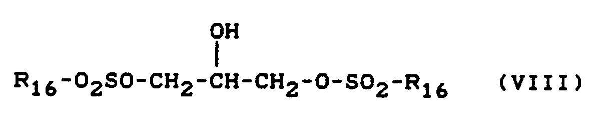
worin
- R₁₆: die vorstehend genannte (bevorzugte) Bedeutung hat.

Bei Verwendung von wasserlöslichen Polyaminen der allgemeinen Formeln (I) bzw. (II) als Ausgangsverbindungen werden für den Fall, daß R₁, R₄ und R₆ für Wasserstoff stehen, als Reaktionsprodukte insbesondere die erfindungsgemäßen Polymeren der allgemeinen Formeln 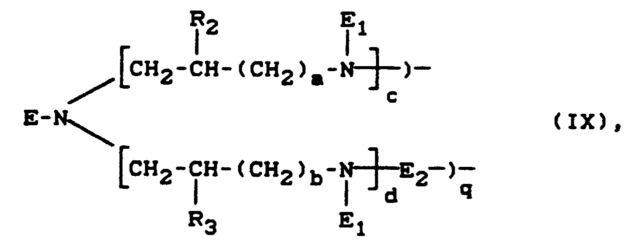
bzw. 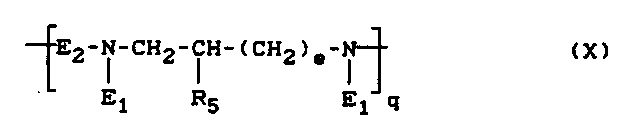
worin
R₂, R₃, R₅, a, b, c, d und e die in Formeln (I) und (II) angegebene Bedeutung haben,
q eine Zahl von 5 bis 250,
E und E₁ Wasserstoff oder eine Gruppe 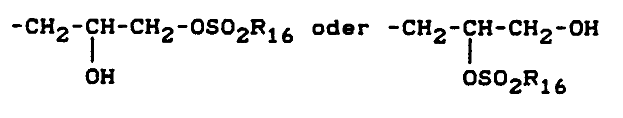
E außerdem C₁-C₄-Alkyl und
E₂ eine Gruppe 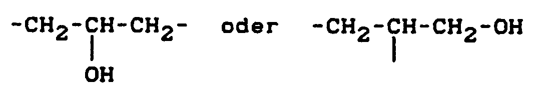
bedeuten, und
R₁₆ die vorstehend genannte (bevorzugte Bedeutung hat,
erhalten.

Die besonders zu nennenden Bedeutungen von R₁₆ sind C₁-C₉-Alkyl, Cyclohexyl oder gegebenenfalls durch C₁-C₄-Alkyl, C₁-C₅-Alkoxy oder Hydroxy substituiertes Phenyl oder Benzyl.

Bei Verwendung von wasserlöslichen Polyamidaminen, die unter A3) beschrieben sind und aus den Aminen (I) und aliphatischen Dicarbonsäuren hergestellt werden, als Ausgangsverbindungen werden für den Fall, daß R₁ in I Wasserstoff bedeutet, die erfindungsgemäßen Polymeren der allgemeinen Formel 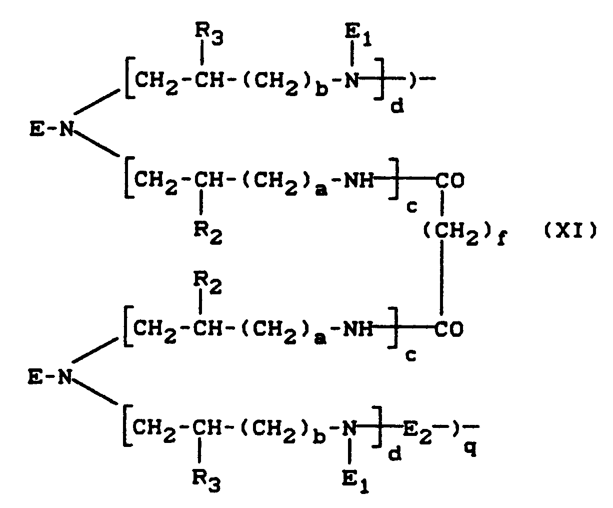
worin
f für eine ganze Zahl von 0 bis 10 steht und die übrigen Symbole die vorstehend genannte Bedeutung haben,
erhalten.

Je nach Molverhältnis A3α: A3β enthalten die Polyamidamine Amino- oder Carboxylendgruppen.

Bei der zusätzlichen Verwendung von Diaminen II als Ausgangskomponente enthalten die Polymeren den Diaminen II entsprechende Amidstrukturen.

Selbstverständlich ist es möglich, bei der Synthese Gemische der basischen Verbindungen A1) bis A5) zu verwenden.

Neben den in den allgemeinen Formeln (IX) bis (XI) wiedergegebenen, sich wiederholenden Struktur-Einheiten treten dann in den erfindungsgemäßen Polymeren die auf die angeführten Mischkomponenten zurückzuführenden Struktur-Einheiten in den Polymerketten auf.

Die vernetzbaren Verbindungen weisen bei einem Feststoffgehalt von 5 bis 30 Gew.-%, vorzugsweise 10 bis 25 Gew.-%, eine Viskosität von 10 bis 600 mPa.s, vorzugsweise 15 bis 500 mPa.s bei 25°C auf. Ihr Molekulargewicht beträgt etwa 1500 bis 250.000, vorzugsweise 2000 bis 200.000. (Gewichtsmittel)

Die Herstellung der erfindungsgemäßen Reaktionsprodukte erfolgt bevorzugt in wäßrigem Medium. Es können auch andere polare Lösungsmittel, wie Methanol, Ethanol, Isopropanol, tert.-Butanol, Ethylenglykol, Diethylenglykol, Triethylenglykol, Polyethylenglykol, Glycerin, Dimethylformamid, Essigester oder bevorzugt deren Gemische mit Wasser verwendet werden.

Die Umsetzung der Ausgangskomponenten A und B erfolgt durch Behandlung der wäßrigen oder wäßrig-organischen etwa 10 bis 60 %ige Lösungen oder Emulsionen der beiden Komponenten bei einer Temperatur von 20 bis 95°C, vorzugsweise 40 bis 85°C, so lange, bis eine Probe der Reaktionsmischung in Form einer 15 %igen, wäßrigen oder wäßrig-organischen Lösung bzw. Emulsion bei 25°C eine Viskosität von 15 bis 300 mPa.s, vorzugsweise 20 bis 200 mPa.s, aufweist.

Danach setzt man dem viskoser werdenden Gemisch zur Beendigung der Einwirkung und zur Stabilisierung der selbstvernetzenden Produkte Säuren zu, so daß der pH-Wert zwischen 1 und 6, vorzugsweise 1,5 und 5,5, liegt.

Als stabilisierende Säuren sind prinzipiell alle Säuren geeignet, insbesondere sind zu nennen:
1. Mineralsäuren bzw. sauer reagierende Derivate dieser Säuren, wie Amidosulfonsäure, schweflige Säure, Kieselsäure, Borsäure, Salpetersäure, Kohlensäure und besonders Schwefel-, Salz- und Phosphorsäure,
2. halogenfreie, gegebenenfalls Hydroxy-Gruppen enthaltende Mono- oder Polycarbonsäuren bzw. Derivate dieser Säuren, wie Essigsäure, Essigsäureanhydrid, Propionsäure, Oxalsäure, Malonsäure, Bernsteinsäure, Glutarsäure, Adipinsäure, Maleinsäure, Milchsäure, Weinsäure, Glykolsäure und besonders Ameisensäure, Äpfelsäure und Citronensäure,
3. halogenfreie aliphatische oder aromatische Sulfonsäuren, wie Hydroxymethansulfonsäure, Cyclohexansulfonsäure, Alkansulfonsäuren, deren Alkanrest 1 bis 6 C-Atome umfaßt, Benzylsulfonsäure, Benzolsulfonsäure, 4-Hydroxybenzolsulfonsäure und besonders Methansulfonsäure und Toluolsulfonsäure (o,m,p)
   oder Gemische hieraus.

Unter Säure-Derivaten sind sauer reagierende Derivate der obengenannten Säuren, insbesondere Anhydride und saure Salze, wie z.B. Alkalihydrogensulfate, zu verstehen.

Durch Verdünnen mit Wasser und/oder Lösungsmittel wird der Feststoffgehalt der Produkte anschließend auf den gewünschten Gehalt eingestellt.

### Als Polyamine (I) seien genannt:

Diethylentriamin, Triethylentetramin, Tetraethylenpentamin, Pentaethylenhexamin, Hexaethylenheptamin, Heptaethylenoctamin, Dipropylentriamin, Tripropylentetramin, Methyl-bis-(3-aminopropyl)-amin, Ethyl-bis-(3-aminopropyl)-amin, 2-Hydroxyethyl-bis-(3-aminopropyl)-amin, Dihexamethylentriamin oder Gemische hieraus.

### Als Diamine (II) sind zu erwähnen:

Ethylendiamin, N-(2-hydroxyethyl)-ethylendiamin, N,N'-Dimethylethylendiamin, 1,2-Diaminopropan, 1,3-Diaminopropan, N-Methyl-1,3-diaminopropan, N,N'-Dimethyl-1,3-diaminopropan, N,N-Dimethyl-1,3-diaminopropan oder Gemische hieraus.

### Als Monoamine (III) seien genannt:

Methylamin, Ethylamin, Isopropylamin, Butylamin, Isobutylamin, Dimethylamin, Aminoethanol, 3-Amino-1-propanol, 3-Amino-2-propanol, 4-Amino-1-butanol, 5-Amino-1-pentanol, 6-Amino-1-hexanol und deren Isomeren sowie Gemische hieraus.

### Als Polyalkylenpolyamine der Formel (IV) seien besonders erwähnt:

a) das bei der diskontinuierlichen, (z.B. Houben-Weyl, 4. Auflage, XI/1, Seite 44), oder bei der kontinuierlichen (z.B. im GB-PS 1 147 984, US-PS 1 832 534 und 2 049 467) Umsetzung von 1,2-Dichlorethan mit wäßrigem Ammoniak, gegebenenfalls in Gegenwart von Ethylendiamin, Diethylentriamin (US-PS 2 769 841 und DE-OS 1 668 922) oder Triethylentetramin erhaltene Polyethylenpolyamingemisch das destillativ von Ethylendiamin, Diethylentriamin, Triethylentetramin und Tetraethylenpentamin befreit ist,
b) die durch Kondensation von 1,2-Dichlorethan mit den in a) genannten Polyethylenpolyaminen, einzeln oder im Gemisch, herstellbaren mehrwertigen oligomeren Amine mit einem mittleren Molekulargewicht von 1000 bis 10.000, vorzugsweise 2000 bis 5000.

Beispiele für aliphatische Polyamine (A3 α) sind bei den Polyaminen (I) genannt.

### Bevorzugt sind:

Diethylentriamin, Triethylentetramin, Tetraethylenpentamin, Pentaethylenhexamin, Hexaethylenheptamin, Dipropylentriamin, Methyl-bis-(3-aminopropyl)-amin, Dihexamethylentriamin bzw. Gemische hieraus oder Gemische hieraus mit 50 Mol-% eines Diamins der Formel (II), vorzugsweise Ethylendiamin.

### Bevorzugte Dicarbonsäuren (A3 β) sind:

Oxalsäure, Bernsteinsäure, Malonsäure, Glutarsäure, Adipinsäure, Sebacinsäure, 1,12-Dodecandisäure, Itaconsäure, Terephthalsäure und Isophthalsäure oder Gemische hieraus.

Bevorzugte Verbindung (A3 γ) ist ε-Caprolactam.

### Als Polyharnstoff (A4) sind zu nennen:

Umsetzungsprodukte aus Harnstoff mit mehrwertigen Aminen, die mindestens drei Aminogruppen enthalten, von denen wenigstens eine eine tertiäre Aminogruppe ist, oder Mischungen dieser Polyamine mit zwei primären oder zwei sekundären Aminogruppen enthaltenden aliphatischen, araliphatischen, cycloaliphatischen oder heterocyclischen Polyaminen sowie gegebenenfalls mit mindestens drei Kohlenstoffatomen enthaltenden ω-Aminocarbonsäuren wie sie z.B. in der oder deren Lactamen,
wie sie z.B. in der Deutschen Offenlegungsschrift 2 925 567 beschrieben werden.

Bevorzugtes 1,2-Alkylenimin (A5) ist Ethylenimin.

### Bevorzugte Beispiele für 2,3-Epoxypropyl-sulfonate oder 2-Hydroxy-propyl-1,3-bissulfonsäureester (B) sind:

2,3-Epoxypropyl-3-methylbenzolsulfonat, 2,3-Epoxypropyl-2-methylbenzolsulfonat, 2,3-Epoxypropylethansulfonat, 2,3-Epoxypropyl-butansulfonat, 2,3-Epoxypropyl-C₁-C₆-alkansulfonat, 2,3-Epoxypropylcyclohexylsulfonat, 2-Hydroxypropyl-1,3-dimethansulfonat, 2-Hydroxypropyl,1,3-di-(4-methylbenzolsulfonat), 2-Hydroxypropyl-1,3-di-benzolsulfonat und besonders 2,3-Epoxypropyl-methansulfonat, 2,3-Epoxypropyl-benzolsulfonat und 2,3-Epoxypropyl-4-methylbenzolsulfonat.

Die Ausrüstung des Papiers mit den erfindungsgemäßen Polymeren erfolgt in an sich bekannter Weise bei pH-Werten von 5 bis 9. Bevorzugt werden die vernetzbaren Verbindungen in Form wäßriger Lösungen oder Emulsionen der wäßrigen Suspension des Papierrohstoffes in der Masse zugesetzt; diese wird dann zu Papier weiterverarbeitet.

Die Zugabemengen betragen je nach gewünschtem Effekt zwischen 0,4 und 4,0 Gew.-% der Lösung oder Emulsion (bezogen auf Papierrohstoff) mit einem jeweiligen Gehalt an Polymeren (Wirkstoffgehalt) von 10 bis 20 Gew.-%. Bei besonders hohen Anforderungen an die Naßfestigkeit werden noch höhere Mengen verwendet. Beispielsweise sind bei Laminatpapieren mit hohem Aschegehalt und niedrigem Flächengewicht Zusatzmengen von 6,0 Gew.-% und mehr erforderlich.

Auf die beschriebene Weise werden unter technisch einfachen und gut handhabbaren Bedingungen, klare, über Monate, vorzugsweise 6 bis 9 Monate, lagerstabile, vorzugsweise wäßrige, kationaktive Lösungen oder Emulsionen erhalten, die vollkommen frei von organisch gebundenem, adsorbierbarem Halogen sind oder sehr geringe Anteile enthalten und hervorragend die Naßfestigkeit eines damit ausgerüsteten Papieres verbessern.

Die erfindungsgemäßen Polymeren unterscheiden sich von bekannten Polyamin/Polyamidamin Reaktiv-Polymeren dadurch, daß bei der Herstellung auf den Einsatz von Epihalogenhydrin oder Epihalogenhydrin-Derivaten vollständig oder weitestgehend verzichtet wurde. Im Gegensatz zu den bisher bekannten Harzen mit einem hohen Gehalt an Halogenhydrin-Reaktivgruppen, enthalten die erfindungsgemäßen Harze die gegenüber dem Papierrohstoff reaktiven Gruppen der Formel 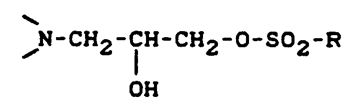
in der
- R: für einen Substituenten wie in R₁₆ beschrieben stehen kann.

### Beispiel 1

a) Herstellung des Polyamidamins (gemäß DE-B 1 771 043, Spalte 4, Zeile 4 bis 25).
   In einem Reaktionsgefäß mit Gaseinleitungsrohr, Innenthermometer und Kolonnenkopf wurden 211,5 g (2,05 mol) Diethylentriamin vorgelegt. Unter Rühren wurden 292 g (2,0 mol) Adipinsäure so zugegeben, daß die Temperatur des Reaktionsgemisches 110°C nicht überschritt. Nach beendeter Zugabe wurden unter Überleiten von Stickstoff auf 150°C erwärmt und 1 Stunde unter Rückfluß erhitzt. Danach wurde auf Destillation umgeschaltet und die Temperatur im Verlauf von 3 Stunden auf 190-195°C erhöht. Dabei wurde das Reaktionswasser kontinuierlich abdestilliert. Als die theoretische Menge Wasser (72 g) abdestilliert worden war, wurde nach Abkühlen der Schmelze auf 170°C durch anfangs langsame Zugabe von Wasser auf den gewünschten Feststoffgehalt eingestellt.
   Viskosität (25°C): 470 m Pa·s
   Basen-Äquivalentgewicht: 414 g/basischer Stickstoff (Lösung)
   Basen-Äquivalentgewicht: 203 g/basischer Stickstoff (Festharz)
b) Zu einer Vorlage aus 120 g einer 50 %igen wäßrigen Lösung des gemäß 1a) hergestellten Polyamidamins und 300 ml Wasser tropft man unter Rühren bei 30°C in 30 Minuten 50,0 g 2,3-Epoxypropylmethansulfonat und rührt 30 Minuten bei 35°C nach.

Anschließend heizt man auf 60 bis 70°C auf und fügt bei steigender Viskosität 400 ml Wasser zu. Sobald die gewünschte Viskosität erreicht ist, säuert man durch Zusatz einer Schwefelsäurelösung auf pH 3,0 an.
Feststoffgehalt: 15,0 Gew.-%
Viskosität: 34 mPa.s (25°C)
organ. Cl-Gehalt: 0,001 Gew.-%
organ. S-Gehalt: 1,3 Gew.-%

### Beispiel 2

Zu einer Vorlage aus 120 g einer 50 %igen, wäßrigen Lösung eines Polyamidamins der DE-B 1 771 043, Spalte 4, Zeile 4 bis 25 und 350 ml Wasser tropft man bei 30°C in 20 Minuten unter Rühren 61,0 g 2,3-Epoxypropylmethansulfonat und rührt 30 Minuten bie 35°C nach.

Im Anschluß erwärmt man auf 70°C und fügt bei steigender Viskosität 450 ml Wasser sowie 15,0 g Methyl-bis-(3-aminopropyl)-amin zu. Nach Erreichen der gewünschten Viskosität säuert man mittels einer Schwefelsäurelösung auf pH 2,8 an und stellt den Feststoffgehalt, wie gewünscht ein.
Feststoffgehalt: 15,0 Gew.-%
Viskosität: 28 mPa.s (25°C)
organ. Cl-Gehalt: 0,001 Gew.-%
organ. S-Gehalt: 1,5 Gew.-%

### Beispiel 3

a) Zu einer Vorlage aus 324 g Diethylentriamin fügt man unter Rühren 438 g Adipinsäure und 169,5 g ε-Caprolactam; hierbei steigt die Innentemperatur auf etwa 100°C an.
   Anschließend heizt man in 3 Stunden auf 190°C, wobei das Reaktionswasser gleichmäßig abdestilliert, kühlt dann auf 150°C ab und setzt 800 ml Wasser zu.
   Man rührt noch 1 Stunde bei 80 bis 90°C nach und kühlt dann ab.
   Viskosität: 330 mPa.s (25°C)
   Feststoffgehalt: 51,7 Gew.-%
   Basenäquivalentgewicht: 436 g/Val bas. N
   (titriert)
b) Zu einer Vorlage aus 174 g eines in Wasser gelösten Vorproduktes gemäß Beispiel 3a) und 500 ml Wasser tropft man unter Rühren bei 30°C in 30 Minuten 68,3 g 2,3-Epoxypropyl-methansulfonat und rührt 45 Minuten bei dieser Temperatur nach.
   Im Anschluß erwärmt man das Reaktionsgemisch auf 65°C und verdünnt bei steigender Viskosität mit 500 ml Wasser.
   Nach Erreichen der gewünschten Viskosität säuert man mit Hilfe einer Ameisensäure-Lösung auf pH: 3,3 an und stellt den gewünschten Feststoffgehalt ein.
   Feststoffgehalt: 15,0 Gew.-%
   Viskosität: 119 mPa.s (25°C)
   organ. Cl-Gehalt: 0,001 Gew.-%
   organ. S-Gehalt: 1,4 Gew.-%

### Beispiel 4

Zu einer Vorlage aus 122 g einer 50 %igen wäßrigen Lösung eines Polyamidamins der DE-B-1 771 043, Spalte 4, Zeile 4 bis 25, und 381 g Wasser setzt man bei 25°C 71,8 g 2.3-Epoxypropyl-4-methyl-benzolsulfonat portionsweise innerhalb von 30 Minuten zu.

Danach wird 30 Minuten bei 30°C gerührt und anschließend auf 70°C erhitzt.

Diese Temperatur wird beibehalten, und man fügt bei steigender Viskosität kontinuierlich 581 ml Wasser zu.

Nach Erreichen der gewünschten Viskosität säuert man mittels einer Schwefelsäure-Lösung auf pH 3,0 an und stellt den Feststoffgehalt der stabilen Emulsion wie gewünscht ein.
Feststoffgehalt: 14.1 Gew.-%
Viskosität: 465 mPas/25°C
organ. Cl-Gehalt: < 0,01 Gew.-%

### Anwendungsbeispiel

Gebleichter Kiefernsulfit-Zellstoff wird bei einer Stoffdichte von 2,5 % im Holländer auf einen Mahlgrad von 38° Schopper-Riegler gemahlen. Hiervon werden 100 g in ein Becherglas gegeben und mit Wasser auf 1 l verdünnt.

2- bzw. 4-Gew.-% des erfindungsgemäßen Produktes (15 Gew.-% Feststoff) werden auf Faserstoff bezogen in das Becherglas gegeben. Nach einer Rührdauer von 3 Minuten werden mit den Inhalten der Bechergläser auf einem Blattbildner (Rapid-Köthen-Gerät) Papierblätter mit einem Flächengewicht von ca. 80 g/m² gebildet. Die Papierblätter werden bei 90°C 6 Minuten im Vakuum bei einem Druck von 20 mm/Hg getrocknet und im Trockenschrank noch 15 Minuten auf 110°C nacherhitzt.

Aus jedem Papierblatt werden nach der Klimatisierung 5 Prüfstreifen von 1,5 cm Breite ausgeschnitten und 5 Minuten in destilliertes Wasser eingetaucht. Danach werden die nassen Streifen in eine Zugprüfmaschine eingespannt und die Naßbruchlast bestimmt.

Die erhaltenen Ergebnisse sind in der folgenden Tabelle wiedergegeben.

| Beispiel | | | Naßbruchlast (Newton) Einsatzmenge |
|---|---|---|---|
| | 2 % | 4 % | 6 % |
| 1 | 10,3 | 13,8 | 17,7 |
| 2 | 10,4 | 14,2 | 16,9 |
| 3b | 9,5 | 13,0 | - |

## Patentansprüche

1. Vernetzbare Verbindungen mit einem Molekulargewicht (Gewichtsmittel) von 1500 bis 250 000, deren 5 bis 30 Gew.-%ige Lösungen oder Emulsionen eine Viskosität (25°C) von 10 bis 600 m Pa·s aufweisen und die erhältlich sind durch Umsetzung von
A
1) einem wasserlöslichen Mono- oder Polyamin der Formeln 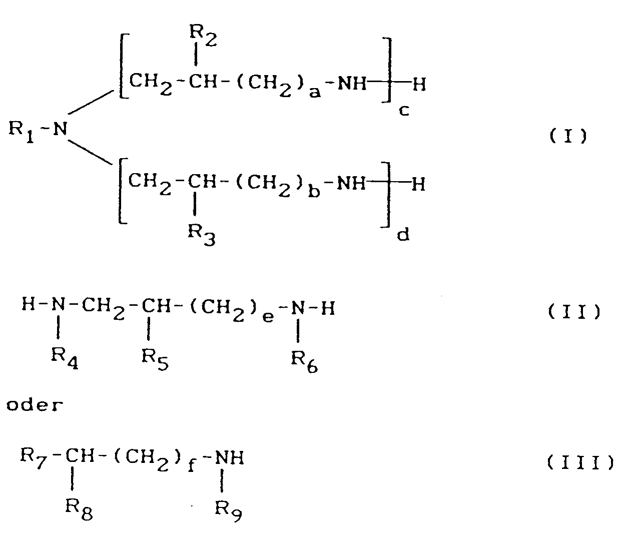 worin
R₁, R₄ und R₆ unabhängig voneinander für Wasserstoff oder einen gegebenenfalls durch Hydroxy, oder Amino substituierten C₁-C₅-Alkylrest,
R₂, R₃, R₅ und R₉ unabhängig voneinander für Wasserstoff, Methyl oder Ethyl,
R₇ und R₈ unabhängig voneinander für Wasserstoff, Hydroxy oder einen gegebenenfalls durch Hydroxy substituierten C₁-C₄-Alkylrest,
a, b, e, f unabhängig voneinander für eine ganze Zahl von 0 bis 4,
c und d unabhängig voneinander für eine ganze Zahl von 1 bis 6 stehen,
und/oder
2) einem Polyalkylenpolyamin der Formel 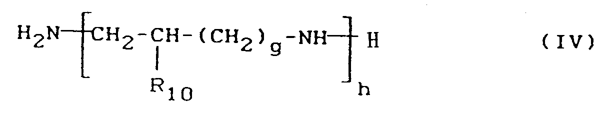 worin
R₁₀ für Wasserstoff und Methyl,
g für 0 oder 1 und
h für eine ganze Zahl von 14 bis 2500
stehen,
und/oder
3) einem wasserlöslichen Polyamidamin mit einem Molekulargewicht von mindestens 800, hergestellt aus
α) Polyaminen der Formel I oder aus Gemischen dieser Polyamine mit bis zu 50 Mol-% an Diaminen der Formel II
und
β) aliphatischen oder aromatischen Dicarbonsäuren mit 2 bis 12 C-Atomen bzw. deren funktionellen Derivaten, wie Anhydriden, Estern, Halbestern oder Amiden
und/oder
γ) 3 bis 6 C-Atome enthaltenden Aminocarbonsäuren oder deren Lactamen
und/oder
4) einem wasserlöslichen, sekundären Aminogruppen aufweisenden Polyharnstoff, welcher durch Kondensation von Harnstoff mit Polyaminen, die mindestens drei Aminogruppen enthalten, von denen wenigstens eine eine tertiäre Aminogruppe ist, oder Mischungen dieser Polyamine mit zwei primären oder zwei sekundären Aminogruppen enthaltenden aliphatischen, araliphatischen, cycloaliphatischen oder heterocyclischen Polyaminen sowie gegebenenfalls mit mindestens drei Kohlenstoffatomen enthaltenden ω-Aminocarbonsäuren oder deren Lactamen hergestellt worden ist,
und/oder
5) einem durch Polymerisation von 1,2-Alkyleniminen hergestellten Polyalkylenimin
mit
B) 2,3-Epoxypropyl-sulfonsäureestern und/oder 2-Hydroxypropyl-1,3-bissulfonsäureester, gegebenenfalls im Gemisch mit bis zu 15 Mol-%, an Epichlorhydrin oder Dihalogenhydrin,
und gegebenenfalls anschließende oder gleichzeitige Umsetzung mit weiterem Mono- oder Polyamin der Formeln (I) bis (III) im Molverhältnis von 0,75 bis 3,5 Mol der Komponente B) pro Mol Basenstickstoff der Komponente A).

2. Verbindungen nach Anspruch 1, bei deren Herstellung als Komponente
B) 2,3-Epoxypropylsulfonsäureester oder 2-Hydroxypropyl-1,3-bissulfonsäureester der Formeln 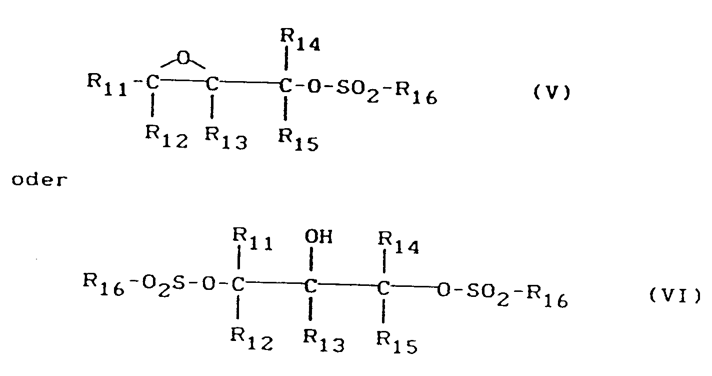 worin
R₁₁, R₁₂, R₁₃, R₁₄ und R₁₅ unabhängig voneinander für Wasserstoff oder einen gegebenenfalls durch Alkoxy, Cyano oder Carbonsäurealkylester substituierten Alkyl-, Cycloalkyl-, Aryl- oder Aralkyl-Rest und
R₁₆ für einen Alkyl-, Cycloalkyl- oder einen gegebenenfalls durch Hydroxy, Alkoxy, Cyano, Carbonamido, Carbonsäurealkylester oder eine gegebenenfalls mono- oder dialkylierte Aminogruppe substituierten Aryl- oder Aralkyl-Rest stehen,
eingesetzt werden.

3. Verbindungen nach Anspruch 1, bei deren Herstellung 2,3-Epoxypropyl-sulfonsäureester oder 2-Hydroxypropyl-1,3-bissulfonsäureester der Formeln 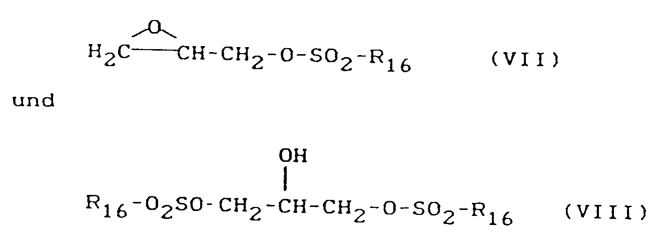 worin
R₁₆ für einen C₁-C₁₆-Alkyl-, C₅-C₁₂-Cycloalkyl- oder einen gegebenenfalls durch Hydroxy, C₁-C₄-Alkoxy, Cyano, Carbonamido, Carbonsäure-C₁-C₄-alkylester oder gegebenenfalls durch 1 oder 2 C₁-C₄-Alkyl substituiertes Amino substituierten Phenyl-, Naphthyl- oder Benzyl-Rest steht,
gegebenenfalls im Gemisch mit bis zu 15 Mol-% Epichlorhydrin oder Dichlorhydrin verwendet werden.

4. Verbindungen nach Anspruch 1, bei deren Herstellung 2,3-Epoxypropylsulfonsäureester, 2,3-Epoxypropyl-methansulfonat, 2,3-Epoxypropyl-C₁-C₆-alkansulfonat, 2,3-Epoxypropyl-cyclohexylsulfonat, 2,3-Epoxypropyl-benzolsulfonat, 2,3-Epoxypropyl-4-methylbenzolsulfonat gegebenenfalls im Gemisch mit bis zu 15 Mol-% Epichlorhydrin verwendet werden.

5. Verbindungen nach Anspruch 1, deren Molekulargewicht 2000 bis 200.000 beträgt.

6. Verbindungen nach Anspruch 1, bei deren Herstellung als stabilisierende Säuren bzw. deren sauer reagierende Derivate Alkalihydrogensulfate, Amidosulfonsäure, schweflige Säure, Salpetersäure, Schwefelsäure, Salzsäure, Phosphorsäure, Essigsäure, Essigsäureanhydrid, Milchsäure, Weinsäure, Ameisensäure, Äpfelsäure, Citronensäure, Methansulfonsäure, Toluolsulfonsäure (o,m,p) und/oder Benzolsulfonsäure verwendet werden.

7. Verfahren zur Behandlung von Papier, dadurch gekennzeichnet, daß man Verbindungen nach Anspruch 1 verwendet.

8. Naßfestmittel für Papier, dadurch gekennzeichnet, daß sie Verbindungen des Anspruchs 1 enthalten.

## Claims

1. Crosslinkable compounds having a molecular weight (weight average) of 1,500 to 250,000, the 5 to 30% strength by weight solutions or emulsions of which having a viscosity (25°C) of 10 to 600 mPa.s which are obtainable by reaction of
A
1) a water-soluble mono- or polyamine of the formulae 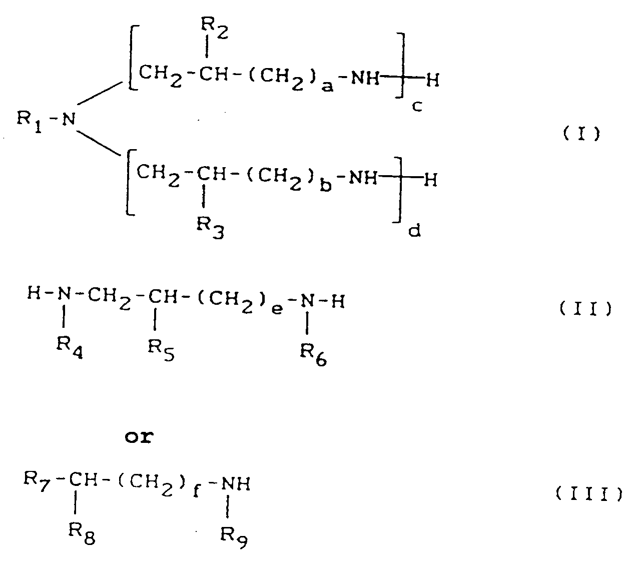 wherein
R₁, R₄ and R₆ independently of one another represent hydrogen or a C₁-C₅-alkyl radical which is optionally substituted by hydroxyl or amino,
R₂, R₃, R₅ and R₉ independently of one another represent hydrogen, methyl or ethyl,
R₇ and R₈ independently of one another represent hydrogen, hydroxyl or a C₁-C₄-alkyl radical which is optionally substituted by hydroxyl,
a, b, e and f independently of one another represent an integer from 0 to 4,
c and d independently of one another represent an integer from 1 to 6,
and/or
2) a polyalkylenepolyamine of the formula 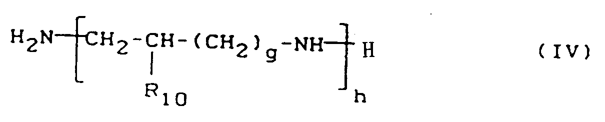 wherein
R₁₀ represents hydrogen and methyl,
g represents 0 or 1 and
h represents an integer from 14 to 2,500,
and/or
3) a water-soluble polyamidamine having a molecular weight of at least 800 and prepared from
α) polyamines of the formula I or from mixtures of these polyamines with up to 50 mol % of diamines of the formula II
and
β) aliphatic or aromatic dicarboxylic acids having 2 to 12 C atoms or functional derivatives thereof, such as anhydrides, esters, half-eaters or amides,
and/or
γ) amino-carboxylic acids containing 3 to 6 C atoms or lactams thereof,
and/or
4) a water-soluble polyurea containing secondary amino groups which has been prepared by condensation of urea with polyamines containing at least three amino groups of which at least one is a tertiary amino group, or mixtures of these polyamines with aliphatic, araliphatic, cycloaliphatic or heterocyclic polyamines containing two primary or two secondary amino groups, and if appropriate with ω-aminocarboxylic acids containing at least three carbon atoms or lactams thereof,
and/or
5) a polyalkyleneimine prepared by polymerization of 1,2-alkyleneimines,
with
B) 2,3-epoxypropyl sulphonates and/or 2-hydroxypropyl 1,3-bis-sulphonate, if appropriate mixed with up to 15 mol % of epichlorohydrin or dihalogenohydrin
and if appropriate subsequent or simultaneous reaction with another mono- or polyamine of the formulae (I) to (III) in a molar ratio of 0.75 to 3.5 mol of component B) per mol of basic nitrogen in component A).

2. Compounds according to Claim 1, for the preparation of which, as component B), 2,3-epoxypropyl sulphonates or 2-hydroxypropyl 1,3-bis-sulphonates of the formulae 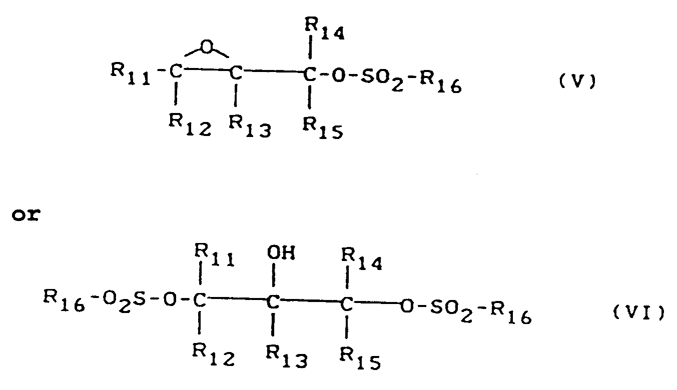 wherein
R₁₁, R₁₂, R₁₃, R₁₄ and R₁₅ independently of one another represent hydrogen or an alkyl, cycloalkyl, aryl or aralkyl radical which is optionally substituted by alkoxy, cyano or carboxylic acid alkyl ester and
R₁₆ represents an alkyl or cycloalkyl radical or an aryl or aralkyl radical which is optionally substituted by hydroxyl, alkoxy, cyano, carboxamido, carboxylic acid alkyl ester or an optionally mono- or dialkylated amino group, are used.

3. Compounds according to Claim 1, for the preparation of which 2,3-epoxypropyl sulphonates or 2-hydroxypropyl 1,3-bis-sulphonates of the formulae 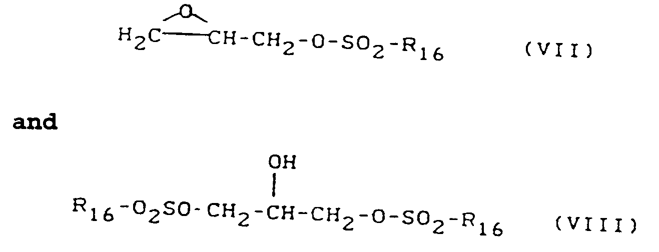 wherein
R₁₆ represents a C₁-C₁₆-alkyl or C₅-C₁₂-cycloalkyl radical or a phenyl, naphthyl or benzyl radical which is optionally substituted by hydroxyl, C₁-C₄-alkoxy, cyano, carboxamido, carboxylic acid C₁-C₄-alkyl ester or amino which is optionally substituted by 1 or 2 C₁-C₄-alkyl,
if appropriate mixed with up to 15 mol % of epichlorohydrin or dichlorohydrin, are used.

4. Compounds according to Claim 1, for the preparation of which 2,3-epoxypropyl sulphonate, 2,3-epoxypropyl methanesulphonate, 2,3-epoxypropyl C₁-C₆-alkanesulphonate, 2,3-epoxypropyl cyclohexylsulphonate, 2,3-epoxypropyl benzenesulphonate or 2,3-epoxypropyl 4-methylbenzenesulphonate, if appropriate mixed with up to 15 mol% of epichlorohydrin, are used.

5. Compounds according to Claim 1, the molecular weight of which is 2,000 to 200,000.

6. Compounds according to Claim 1, for the preparation of which, as stabilizing acids or acid-reacting derivatives thereof, alkali metal hydrogen sulphates, amidosulphonic acid, sulphurous acid, nitric acid, sulphuric acid, hydrochloric acid, phosphoric acid, acetic acid, acetic anhydride, lactic acid, tartaric acid, formic acid, malic acid, citric acid, methanesulphonic acid, toluenesulphonic acid (o, m and p) and/or benzenesulphonic acid are used.

7. Process for the treatment of paper, characterized in that compounds according to Claim 1 are used.

8. Agents for imparting wet strength to paper, characterized in that they contain compounds of Claim 1.

## Revendications

1. Composés réticulables de poids moléculaire (moyenne en poids) 1 500 à 250 000 dont les solutions ou émulsions à des concentrations de 5 à 30% en poids ont une viscosité de 10 à 600 mPa.s à 25°C et qu'on obtient par réaction de :
A
1) une mono- ou polyamine soluble dans l'eau de formules 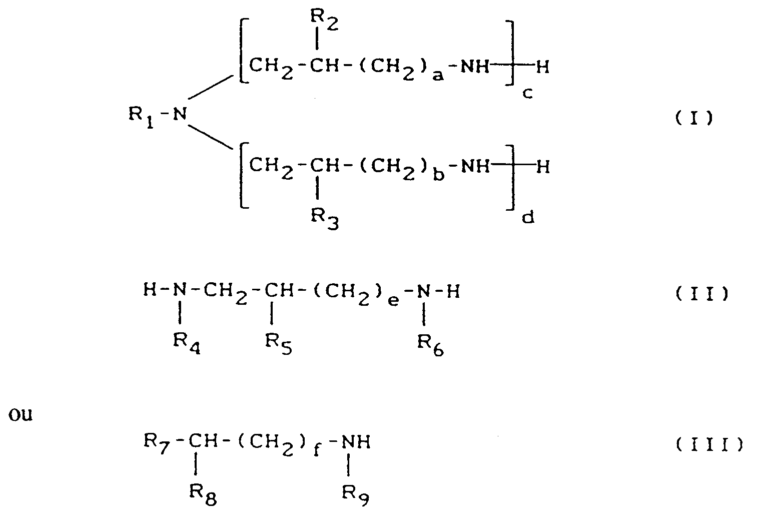 dans lesquelles
R₁, R₄ et R₆ représentent chacun, indépendamment les uns des autres, l'hydrogène ou un groupe alkyle en C₁-C₅ éventuellement substitué par des groupes hydroxy ou amino,
R₂, R₃, R₅ et R₉ représentent chacun, indépendamment les uns des autres, l'hydrogène, un groupe méthyle ou éthyle,
R₇ et R₈ représentent chacun, indépendamment l'un de l'autre, l'hydrogène, un groupe hydroxy ou un groupe alkyle en C₁-C₄ éventuellement substitué par des groupes hydroxy,
a, b, e, f représentent chacun, indépendamment les uns des autres, un nombre entier de 0 à 4,
c et d représentent chacun, indépendamment l'un de l'autre, un nombre entier de 1 à 6
et/ou
2) une polyalkylène-amine de formule : 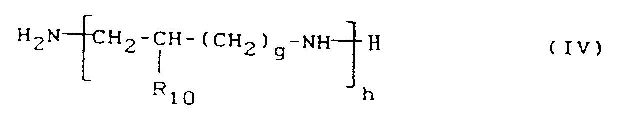 dans laquelle
R₁₀ représente l'hydrogène ou un groupe méthyle,
g est égal à 0 ou 1, et
h est un nombre entier allant de 14 à 2 500,
et/ou
3) une polyamide-amine soluble dans l'eau de poids moléculaire au moins 800, préparée à partir de :
α) des polyamines de formule (I) ou des mélanges de ces polyamines avec une proportion allant jusqu'à 50 mol% de diamines de formule (II)
et
β) des acides dicarboxyliques aliphatiques ou aromatiques en C₂-C₁₂ ou leurs dérivés fonctionnels tels que les anhydrides, les esters, les hémiesters ou les amides,
et/ou
γ) des acides aminocarboxyliques en C₃-C₆ ou leurs lactames
et/ou
4) une polyurée soluble dans l'eau, contenant des groupes amino secondaires, qui a été préparée par condensation de l'urée avec des polyamines contenant au moins 3 groupes amino dont l'un au moins est un groupe amino tertiaire, ou des mélanges de ces polyamines avec des polyamines aliphatiques, araliphatiques, cycloaliphatiques ou hétérocycliques contenant deux groupes amino primaires ou deux groupes amino secondaires, et le cas échéant avec des acides ω-aminocarboxyliques à au moins 3 atomes de carbone ou leurs lactames,
et/ou
5) une polyalkylène-imine préparée par polymérisation de 1,2-alkylène-imines
avec
B) des esters d'acides 2,3-époxypropylsulfoniques et/ou des esters d'acides 2-hydroxypropyl-1,3-bis-sulfoniques, éventuellement en mélange avec une proportion allant jusqu'à 15 mol% d'épichlorhydrine ou d'une dihalogénhydrine,
avec le cas échéant réaction subséquente ou simultanée avec des compléments d'une mono- ou polyamine de formules (I) à (III), à un rapport molaire de 0,75 à 3,5 mol du composant B) par mole d'azote basique du composant A).

2. Composés selon la revendication 1, pour la préparation desquels on a utilisé en tant que composant
B) des esters d'acides 2,3-époxypropylsulfoniques ou des esters d'acides 2-hydroxypropyl-1,3-bis-sulfoniques de formules : 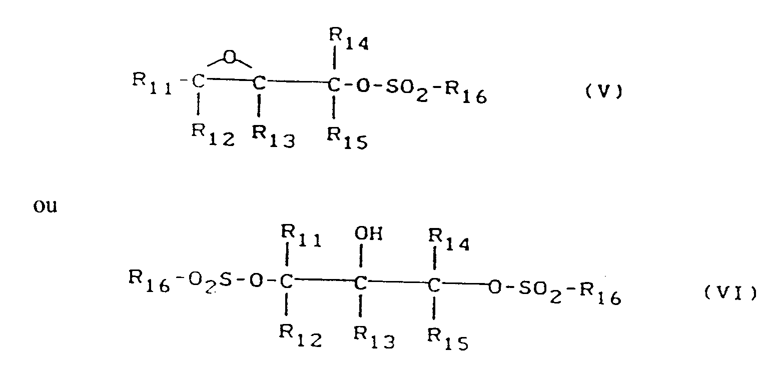 dans lesquelles
R₁₁, R₁₂, R₁₃, R₁₄ et R₁₅ représentent chacun, indépendamment les uns des autres, l'hydrogène ou un groupe alkyle, cycloalkyle, aryle ou aralkyle éventuellement substitué par des groupes alcoxy, cyano ou carboxylate d'alkyle, et
R₁₆ représente un groupe alkyle, cycloalkyle ou un groupe aryle ou aralkyle éventuellement substitué par un groupe hydroxy, alcoxy, cyano, carboxamido, carboxylate d'alkyle amino éventuellement mono- ou dialkylé.

3. Composés selon la revendication 1, pour la préparation desquels on a utilisé des esters 2,3-époxypropylsulfoniques ou 2-hydroxypropyl-1,3-bis-sulfoniques de formules : 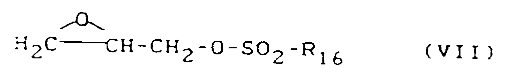 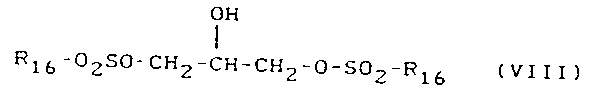 dans lesquelles
R₁₆ représente un groupe alkyle en C₁-C₁₆, cycloalkyle en C₅-C₁₂ ou un groupe phényle, naphtyle ou benzyle éventuellement substitué par des groupes hydroxy, alcoxy en C₁-C₄, cyano, carboxamido, carboxylate d'alkyle en C₁-C₄ ou amino éventuellement substitué par un ou deux groupes alkyle en C₁-C₄, éventuellement en mélange avec une proportion allant jusqu'à 15 mol% d'épichlorhydrine ou de dichlorhydrine.

4. Composés selon la revendication 1, pour la préparation desquels on a utilisé des esters d'acides 2,3-époxypropylsulfoniques, un 2,3-époxypropyl-méthane-sulfonate, un 2,3-époxypropyl-(alcane en C₁-C₆)-sulfonate, un 2,3-époxypropylcyclohexylsulfonate, un 2,3-époxypropylbenzène-sulfonate, un 2,3-époxypropyl-4-méthylbenzène-sulfonate éventuellement en mélange avec une proportion allant jusqu'à 15 mol% d'épichlorhydrine.

5. Composés selon la revendication 1, dont le poids moléculaire va de 10 000 à 200 000.

6. Composés selon la revendication 1, pour la préparation desquels on a utilisé en tant qu'acides stabilisants ou dérivés stabilisants à réaction acide des bisulfates alcalins, de l'acide amidosulfonique, de l'acide sulfureux, de l'acide nitrique, de l'acide sulfurique, de l'acide chlorhydrique, de l'acide phosphorique, de l'acide acétique, de l'anhydride acétique, de l'acide lactique, de l'acide tartrique, de l'acide formique, de l'acide malique, de l'acide citrique, de l'acide méthane-sulfonique de l'acide toluène-sulfonique (o,m,p) et/ou de l'acide benzène-sulfonique.

7. Procédé pour traiter le papier, caractérisé en ce que l'on utilise des composés selon la revendication 1.

8. Agent conférant au papier la résistance au mouillé, caractérisé en ce qu'il contient des composés de la revendication 1.
